# FASCICULE DE BREVET EUROPEEN

(11) **EP 1 034 037 B1**
(45) Date de publication et mention de la délivrance du brevet: **23.05.2001**
(21) Numéro de dépôt: 98955700.4
(22) Date de dépôt: 19.11.1998
(51) Int. Cl.: B01J 49/00, C02F 1/42

(54) **PROCEDE D'OPTIMISATION DU CYCLE DE FONCTIONNEMENT D'UNE UNITE DE TRAITEMENT D'EAU**
VERFAHREN ZUR OPTIMALISIERUNG EINES BETRIEBSZYKLUS EINER WASSERBEHANDLUNGSEINHEIT
METHOD FOR OPTIMISING THE OPERATING CYCLE OF A WATER TREATMENT UNIT

(30) Priorité: 27.11.1997 FR 9714946
(43) Date de publication de la demande: 13.09.2000
(73) Titulaire: BWT France, 93200 Saint-Denis (FR); Siebe Aplliance Controls, 74311 Thyez (FR)
(72) Inventeur: GAGNAIRE, Thierry, F-74300 Thyez (FR); GERINIERE, Pierre, F-74300 Cluses (FR); GUSSE, Jean-Michel, F-74190 Passy (FR); JOUBERT, Dominique, F-92130 Issy les Moulineaux (FR); THARREAU, Véronique, F-75018 Paris (FR)
(74) Mandataire: Armengaud Ainé, Alain
(86) Numéro de dépôt international: FR9802476
(87) Numéro de publication internationale: WO9928036

(56) Documents cités:
- EP-A- 0 129 138
- EP-A- 0 308 523
- WO-A-91/05740
- WO-A-94/13379
- FR-A- 2 145 598
- US-A- 4 299 698
- US-A- 4 320 010

## Description

La présente invention est relative à un procédé d'optimisation du fonctionnement d'une unité de traitement de fluide gazeux ou liquide, telle que notamment une unité d'échange d'ions, comme par exemple les adoucisseurs.

Ces appareils visent à réduire la dureté excessive (ou de titre hydrotimétrique élevé) des eaux couramment distribuées pour des usages domestiques, alimentaires, industriels.

Lors du traitement par adoucissement, une eau claire ou clarifiée chemine au travers et au contact d'une résine échangeuse d'ions ; au cours de son passage, les ions, notamment calcium et magnésium dissous dans l'eau, sont échangés contre les ions sodium de la résine. Ainsi, en sortie de l'adoucisseur, la minéralisation sodique s'est substituée à la minéralisation calcique et magnésienne. Par contre, cette opération ne modifie pas la teneur en anions de l'eau (sulfates, chlorures,..).

En utilisation normale, les résines de l'unité régénérante se chargent en ions calcium et magnésium, et s'appauvrissent en ions sodium. Au fur et à mesure des cycles, les rendements des résines baissent et afin de conserver son efficacité à l'adoucisseur, il est donc nécessaire de régénérer ou remplacer ces résines.

Classiquement, la régénération des résines est réalisée à l'aide d'une saumure (solution très concentrée en chlorure de sodium). Les ions sodium de cette saumure, présents en grande quantité, chassent les ions calcium et magnésium fixés sur la résine et permettent à celle-ci de recouvrer sa forme sodique.

Le pilotage des unités régénérantes est de façon classique assuré par un dispositif de contrôle et de commande qui comptabilise par exemple un volume d'eau adoucie, un temps de marche, un nombre de cycles, une quantité de sel dissous ; ces mesures ne reflètent pas réellement le degré de saturation des résines régénérantes et il arrive donc fréquemment que la phase de régénération soit activée a priori sans vraiment tenir compte de l'état réel des résines. Ce processus visant à la détection et au déclenchement de la phase de régénération de la résine à partir d'un seuil arbitraire va générer une consommation excessive de la saumure de régénération.

Ce mode de fonctionnement des appareils connus de l'art antérieur reflète également un encombrement ou un volume des divers sous-ensembles formant l'unité de traitement d'eau. Ainsi, le gabarit de l'unité de stockage de sel est surdimensionné ; il en est de même pour l'unité d'adoucissement afin de garantir un rendement donné.

La présente invention vise également une unité de traitement d'eau équipée du nouveau procédé de gestion du cycle de régénération ci-dessus évoqué.

Cette unité doit permettre, d'une part le passage au sein de la résine ou de n'importe quel matériau traitant, d'un liquide à traiter, l'écoulement devant s'effectuer selon une direction préférentielle et selon une vitesse donnée afin de respecter les prescriptions d'utilisation de la résine telles que notamment le temps de contact nécessaire à la réaction d'échange d'ions, et d'autre part autoriser le mouvement, au travers de ce même matériau traitant, également dans un sens favorable et à une vitesse donnée, d'un fluide de régénération tel que notamment une saumure.

Les unités régénérantes connues de l'art antérieur, fonctionnant selon les procédés visés dans les documents EP-A-0 129 138, FR-A-2 145 598, EP-A-0 308 523, US-A-4 320 010, ne prennent pas en compte les différentes natures et qualités d'eau existantes au niveau des points de distribution, ces unités régénérantes utilisent généralement une référence fixe qui ne tient pas compte du milieu à mesurer. Ces procédés sont communément appelés : soit procédé de régénération à mode volume pur, soit procédé de régénération à volume anticipé.

Les appareils qui sont munis d'un système de réglage du point de référence ne s'adaptent pas en continu en fonction des variations ou fluctuations de la nature de l'eau en provenance du point d'utilisation.

La présente invention se propose de pallier ces inconvénients en offrant un procédé d'optimisation du cycle de fonctionnement d'une unité de traitement d'eau visant à permettre la réalisation d'un dispositif de distribution d'eau compatible avec des adoucisseurs de volume restreint, ces derniers étant remplis d'un matériau traitant, cette optimisation pouvant s'affranchir de toute référence, seuil ou valeur de consigne pour détecter l'état d'épuisement du milieu traitant.

A cet effet, le procédé d'optimisation du cycle de fonctionnement d'une unité de traitement d'eau, se caractérise en ce qu'il consiste en :
- une phase d'acquisition de mesures de paramètres physiques ou chimiques reflétant le degré de saturation ou d'épuisement du milieu traitant, à l'aide d'au moins une sonde positionnée au sein d'une enceinte traitante,
- une phase d'analyse de ces mesures à l'aide d'un algorithme,
- cet algorithme consistant en un traitement de la variation de ces mesures et à la détermination des points d'inflexion résultant de cette variation, ceci correspondant à un degré d'épuisement ou de saturation du milieu traitant à partir duquel il convient d'effectuer la régénération du milieu afin de redonner toute son efficacité à l'unité de traitement, cet algorithme étant totalement indépendant, d'une part de la nature physico-chimique du fluide à traiter, ainsi que des variations de cette nature physico-chimique en un même point d'utilisation au cours du temps, et d'autre part des différentes dispersions de la chaîne de mesure.
- une phase de déclenchement d'une étape de fonctionnement de l'unité de traitement d'eau.

D'autres caractéristiques et avantages de la présente invention ressortiront de la description faite ci-après, en référence aux - dessins annexés qui en illustrent un exemple de réalisation dépourvu de tout caractère limitatif. Sur les figures :

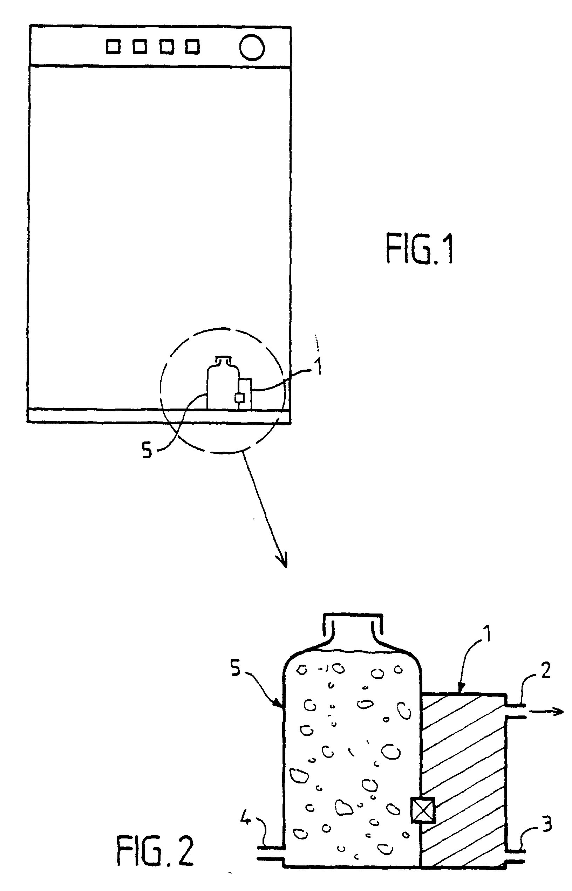

- la figure 1 illustre de manière schématique un lave-vaisselle équipé d'un adoucisseur d'eau permettant la mise en oeuvre du procédé objet de l'invention ;
- la figure 2 est une vue, à plus grande échelle, d'un adoucisseur d'eau pour lave-vaisselle ;

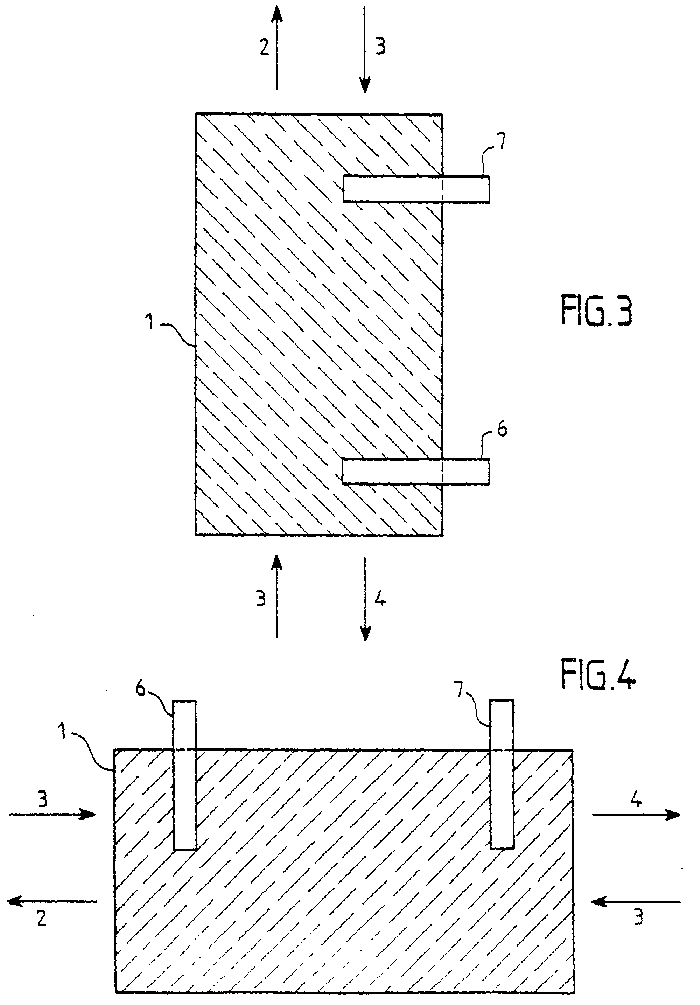

- les figures 3 et 4 illustrent une unité de traitement échangeuse d'ions, munie de sondes permettant la mise en oeuvre du procédé objet de l'invention.

Selon un mode préféré de réalisation d'une unité de traitement 1 permettant la mise en oeuvre du procédé objet de l'invention, celui-ci comporte une unité de traitement conformée en une enceinte, positionnée horizontalement ou verticalement, cette enceinte dispose par ailleurs d'un moyen de distribution et de répartition d'un fluide à traiter et d'une solution régénérante, ou d'un fluide de consommation. Ce moyen de distribution comprend un plateau alvéolaire, dont la répartition des cavités et des orifices détermine des réseaux de distribution distincte. Ce plateau est positionné dans l'enceinte de traitement, indifféremment en position - haute ou basse de cette dernière, il s'étend parallèlement par rapport à l'une des extrémités de l'enceinte de traitement et il permet de délimiter l'enceinte en une zone amont contenant le matériau traitant, notamment de la résine et une zone aval en communication avec le réseau de soutirage en phase de service. L'enceinte est pourvue d'orifices d'entrée 3, 4 et de sortie 2 de fluides.

Ainsi, la surface du plateau est occupée par une pluralité d'orifices qui permettent le passage d'un fluide, généralement le fluide venant d'être traité ou le fluide de régénération, d'une zone à une autre. La répartition de ces orifices sur le plateau est préférentiellement annulaire et périphérique, le diamètre et le nombre de ces trous sont fonction des caractéristiques hydrauliques de la résine.

Selon un autre mode de réalisation du plateau, sa zone centrale est pourvue, éventuellement dans sa partie basse et en regard de la zone aval, d'au moins un orifice de distribution obturable par un corps tel que notamment une bille, un pointeau, une lame, formant clapet. La position de ce corps par rapport au siège de l'orifice est déterminée en fonction de l'utilisation de l'appareil et selon le sens de circulation du fluide. En phase de service, le siège de l'organe de distribution est passant, il n'est pas obturé, mettant en communication le fluide traité avec le réseau de soutirage tandis qu'en phase de régénération, le siège est obturé et le fluide de régénération est distribué vers les orifices devant assurer la diffusion de la saumure provenant d'un bac de stockage 5 au travers de la résine.

Dans une phase d'utilisation de soutirage d'un fluide de consommation, le fluide chemine à l'intérieur de la zone amont et donc à travers de la couche traitante, il parvient dans la zone aval grâce à la pluralité d'orifices du plateau, puis parvenu devant l'orifice pourvu de son clapet, dans son sens passant, le fluide débouche dans la zone du plateau qui est reliée au canal d'évacuation et de soutirage.

En phase de régénération, le fluide régénérant (saumure) est introduit dans l'unité de traitement à contre-courant par l'intermédiaire d'un orifice si le dispositif est placé en partie basse, mais cette circulation devient à co-courant si ce dernier est positionné en partie haute.

Ainsi dans un mode, par exemple, de circulation à contre-courant, il aboutit directement dans la cavité interne de la zone centrale du plateau, mais ne peut pas franchir l'un des disques du plateau, car dans ce sens de circulation, le corps formant clapet est plaqué sur le siège de l'orifice. Le fluide régénérant est donc refoulé au travers des orifices du plateau et réparti sur l'ensemble du maillage, afin de diffuser la solution riche en chlorure de sodium au sein de la couche traitante saturée, notamment la résine.

Selon un autre mode de réalisation, l'une quelconque des parties du plateau, peut être remplacée par une membrane dont les caractéristiques de résistance à l'écoulement sont fonction du sens de passage du fluide qui la traverse. Ainsi, un plateau selon l'invention sera constitué par un assemblage concentrique d'une pluralité d'anneaux et de disques, orientés suivant leur position sur le plateau dans un sens passant ou résistant par rapport à la direction du fluide de traitement ou de régénération.

Selon un autre mode de réalisation, les orifices de diffusion de la saumure au travers de la résine sont remplacés des crépinettes ou par un réseau de canaux en étoile.

Selon une caractéristique avantageuse de l'invention, on dispose à l'intérieur du matériau traitant 1 (résine) situés dans l'enceinte d'au moins une sonde 6, 7 permettant de mesurer une grandeur ou un paramètre physique ou chimique qui reflète l'état de saturation ou de régénération du milieu traitant tel que notamment la conductivité.

Préférentiellement, ces sondes, dans une configuration d'enceinte verticale et/ou horizontale, sont placées au sein de l'enceinte traitante.

Selon une caractéristique avantageuse de l'invention, ces sondes sont au nombre d'au moins une et préférentiellement deux et sont placées selon une position diamétralement opposée ou diamétralement superposée, ou selon une position intermédiaire entre les précédentes.

Le milieu traitant baignant les sondes est de préférence dans un état permettant d'obtenir un faible taux de vide afin d'enserrer les électrodes de mesure des diverses sondes.
L'unité de traitement comporte par ailleurs un dispositif électronique ou électromécanique relié de manière connue aux sondes et particulièrement à leurs électrodes, afin de connaître la mesure du paramètre physique ou chimique caractéristique de l'état de saturation de la résine.

Ce dispositif électronique est muni d'un circuit de double isolement garantissant la protection électrique de l'utilisateur de l'appareil, cette double isolation pouvant s'obtenir notamment de différentes façons telles que via l'électronique, transformateur, optocoupleur, relais ou via tout autre composant électromécanique.

Ce dispositif électronique est muni également d'un dispositif permettant de suivre l'évolution de la mesure provenant des sondes et de les interpréter en fonction d'un algorithme prédéfini, le résultat de cet algorithme conditionnant la détermination du point de départ de la phase de régénération ou du remplacement de la résine et/ou de l'unité de traitement.

Le procédé d'optimisation du cycle de régénération d'une unité de traitement d'eau consiste en une première étape d'acquisition des mesures des valeurs reflétant le degré de saturation ou d'épuisement du milieu traitant provenant des sondes positionnées au sein de celui-ci.

Ces valeurs sont ensuite analysées à l'aide d'un algorithme, cet algorithme permettant de déterminer l'état et/ou le degré de saturation du milieu traitant afin de pouvoir décider de l'opportunité d'effectuer la régénération du milieu traitant pour redonner toute son efficacité à l'unité de traitement.

Cet algorithme peut consister par exemple en, d'une part la mesure de l'écart entre les différentes valeurs acquises, et d'autre part la détermination du sens de variation de cet écart, ou encore cet algorithme peut consister en la détermination des points d'inflexion résultant de cette variation.

Quel que soit le type d'algorithme utilisé, il s'affranchit d'un traitement de valeurs métrologiques ou physico-chimiques absolues.
En outre, on peut noter que ce procédé d'optimisation utilisant les algorithmes décrits ci-dessus est particulièrement avantageux car il est totalement indépendant, d'une part de la nature physico-chimique du fluide à traiter, ainsi que des variations de cette nature physico-chimique en un même point d'utilisation au cours du temps, et d'autre part des différentes dispersions de la chaîne de mesure comprenant notamment la constante de temps de la sonde, les offset électroniques...

Le résultat de cet algorithme qui détermine une valeur de consigne à un instant considéré, correspond en fait au degré d'épuisement ou de saturation du milieu traitant à partir duquel il convient d'effectuer la régénération du milieu afin de redonner toute son efficacité à l'unité de traitement.

Selon un premier mode de réalisation, cette valeur de consigne est figée lors de la construction de l'unité de commande et de contrôle électronique, ou, selon un deuxième mode de réalisation, peut être ajustée par un dispositif de réglage en fonction des applications de l'unité de traitement, ou encore selon un troisième mode de réalisation, est en fait le résultat de l'algorithme en temps réel et s'auto-adapte en fonction de l'évolution du milieu traitant.

Quel que soit le mode de réalisation, cette valeur de consigne résulte de multiples essais et correspond au savoir-faire de l'utilisateur.

L'acquisition des diverses mesures provenant des sondes s'effectue au cours du fonctionnement normal de l'unité de traitement, en d'autres termes, pendant la phase de soutirage et selon une cadence d'horloge prédéterminée.

Bien entendu, le procédé objet de l'invention permet également de suivre l'évolution du phénomène en sens inverse, ainsi, dans notre cas particulier, l'évolution du degré "de rafraîchissement" du milieu traitant lors du passage de la saumure de régénération peut être étudiée par le suivi des valeurs et de leurs variations relatives, provenant des sondes.

A l'aide de ce procédé, l'utilisateur peut connaître les constantes de fonctionnement du milieu traitant qui conditionnent un nouveau passage dans une phase de soutirage, ou alerte, détecte et signale un dysfonctionnement (dans le cas d'un lave-vaisselle ou d'un adoucisseur, manque de sel par exemple, électrovanne bouchée, problèmes électriques...).

La présente invention telle qu'elle vient d'être décrite, possède de très nombreux avantages et particulièrement grâce à l'utilisation du procédé d'optimisation, elle permet la mise au point d'une unité d'adoucissement de petit volume, avantageusement destinée à des applications d'appareils domestiques du type notamment lave-vaisselle.

En effet, les concepteurs de lave-vaisselle ont le souci constant, pour un volume de traitement donné, d'offrir un nombre de couverts de plus en plus élevé, bien entendu sans nuire à l'efficacité. Il résulte de ce constat une recherche croissante de l'espace et particulièrement d'une réduction de l'espace dévolu aux organes du lave-vaisselle et particulièrement à une diminution du volume du bac à sel 5 et/ou de l'unité d'adoucissement d'eau 1.

Cette réduction du volume de ces organes ne peut être effectuée que si leur rendement est conservé, ce qui sous-entend que la détermination du point de fonctionnement du milieu traitant saturé et/ou régénéré est correct.

L'invention telle que décrite précédemment offre de multiples avantages, car elle permet une substantielle économie de réactifs utilisés (par exemple du sel) pour la régénération du milieu traitant et d'eau consommée pour cette régénération grâce, d'une part à l'utilisation d'un procédé permettant de détecter le degré exact de saturation du milieu traitant et donc de ne le régénérer que lorsque cela est nécessaire, et d'autre part à l'utilisation de dispositifs spécifiques de distribution et de répartition du fluide à traiter et de la solution régénérante, permettant ainsi l'exploitation de la totalité du volume d'échange du milieu traitant.

Le procédé permet également de résoudre un autre souci majeur pour les concepteurs d'adoucisseurs notamment pour lave-vaisselle, à savoir la diminution de la consommation d'eau (pas de surrégénération) tout en assurant une qualité de lavage constante (pas de sous régénération), pour un meilleur respect de l'environnement, les quantités de sel rejeté étant ainsi minimisées.

Il demeure bien entendu que la présente invention n'est pas limitée aux exemples de réalisation décrits et représentés ci-dessus, mais qu'elle en englobe toutes les variantes.

## Revendications

1. Procédé d'optimisation du cycle de fonctionnement d'une unité de traitement d'eau, caractérisé en ce qu'il consiste en :
- une phase d'acquisition de mesures de paramètres physiques ou chimiques reflétant le degré de saturation ou d'épuisement du milieu traitant, à l'aide d'au moins une sonde (6, 7) positionnée au sein d'une enceinte traitante (1),
- une phase d'analyse de ces mesures à l'aide d'un algorithme,
- cet algorithme consistant en un traitement de la variation de ces mesures et à la détermination des points d'inflexion résultant de cette variation, ceci correspondant à un degré d'épuisement ou de saturation du milieu traitant à partir duquel il convient d'effectuer la régénération du milieu afin de redonner toute son efficacité à l'unité de traitement, cet algorithme étant totalement indépendant, d'une part de la nature physico-chimique du fluide à traiter, ainsi que des variations de cette nature physico-chimique en un même point d'utilisation au cours du temps, et d'autre part des différentes dispersions de la chaîne de mesure.
- une phase de déclenchement d'une étape de fonctionnement de l'unité de traitement d'eau.

2. Procédé d'optimisation selon la revendication 1, caractérisé en ce que la phase de déclenchement consiste en la phase de régénération ou de changement du milieu traitant et/ou de l'unité de traitement d'eau.

3. Procédé d'optimisation selon l'une des revendications 1 ou 2, caractérisé en ce qu'il détecte et signale un dysfonctionnement de la phase de régénération.

4. Procédé d'optimisation selon l'une quelconque des revendications précédentes, caractérisé en ce que la phase de déclenchement consiste en la phase de soutirage de l'unité de traitement d'eau.

5. Procédé selon l'une quelconque des revendications précédentes, caractérisé en ce que l'algorithme utilisé permet d'obtenir une moindre consommation de solution régénérante et d'eau de régénération.

6. Dispositif pour la mise en oeuvre du procédé, objet des revendications 1 à 5, caractérisé en ce qu'il comporte une enceinte remplie d'un matériau traitant, ladite enceinte étant munie en outre d'au moins une sonde (6, 7) permettant de mesurer une grandeur ou un paramètre physique ou chimique qui reflète l'état de saturation ou de régénération du milieu traitant, ledit milieu traitant baignant les sondes étant dans un état permettant d'obtenir un faible taux de vide, afin d'enserrer les électrodes de mesure des diverses sondes.

7. Dispositif selon la revendication 6, caractérisé en ce que les sondes mesurent la conductivité du milieu.

8. Dispositif selon l'une des revendications 6 ou 7, caractérisé en ce que les sondes sont préférentiellement au moins deux et sont placées selon une position diamétralement opposée ou diamétralement superposée, ou selon une position intermédiaire entre les précédentes.

9. Dispositif selon l'une quelconque des revendications 6 à 8, caractérisé en ce que l'enceinte contenant le matériau traitant est muni de dispositifs spécifiques de distribution et de répartition du fluide à traiter et de la solution régénérante.

10. Dispositif selon l'une quelconque des revendications 6 à 9, caractérisé en ce qu'il comporte un dispositif électronique ou électromécanique qui est muni d'un double isolement garantissant la protection électrique de l'utilisateur de l'appareil.

11. Dispositif selon l'une quelconque des revendications 6 à 10, caractérisé en ce que l'unité de traitement est un adoucisseur pour lave-vaisselle.

12. Dispositif selon l'une des revendications 6 à 10 caractérisé en ce que l'unité de traitement est un adoucisseur d'eau domestique.

## Claims

1. Method for optimising the operating cycle of a water treatment unit, characterised in that it consists of:
- a phase for acquiring measurements of physical or chemical parameters reflecting the degree of saturation or exhaustion of the treating medium, with the aid of at least one probe (6, 7) located within a treating enclosure (1),
- a phase for analysing these measurements with the aid of an algorithm,
- this algorithm consisting in processing the variation in these measurements and in determining inflection points resulting from this variation, which corresponds to a degree of exhaustion or saturation of the treating medium from which it is advisable to carry out regeneration of the medium to restore complete efficacy to the treatment unit, this algorithm being totally independent, on the one hand, of the physico-chemical nature of the fluid to be treated and the variations in this physico-chemical nature at the same point of use in the course of time, and, on the other hand, of the different dispersions of the measurement chain.
- a phase for triggering an operating stage of the water treatment unit.

2. Optimisation method according to claim 1, characterised in that the triggering phase consists of the phase for regenerating or changing the treating medium and/or the water treatment unit.

3. Optimisation method according to one of claims 1 or 2, characterised in that it detects and indicates a dysfunction in the regeneration phase.

4. Optimisation method according to any of the preceding claims, characterised in that the triggering phase consists of the extraction phase of the water treatment unit.

5. Process according to any of the preceding claims, characterised in that the algorithm used allows a lower consumption of regenerating solution and regenerating water to be achieved.

6. Device for implementing the method which is the subject of claims 1 to 5, characterised in that it includes an enclosure filled with a treating material, said enclosure being further equipped with at least one probe (6, 7) allowing a value or a physical or chemical parameter to be measured which reflects the state of saturation or regeneration of the treating medium, said treating medium soaking the probes being in a state for obtaining a low void content in order to surround the electrodes for measuring the various probes.

7. Device according to claim 6, characterised in that the probes measure the conductivity of the medium.

8. Device according to one of claims 6 or 7, characterised in that there are preferably at least two probes which are located in a position diametrically opposed or diametrically superimposed or in an intermediate position therebetween.

9. Device according to any of claims 6 to 8, characterised in that the enclosure containing the treating material is equipped with specific devices for distributing and spreading the treatment fluid and the regenerating solution.

10. Device according to any of claims 6 to 9, characterised in that it comprises an electronic or electromechanical device which is equipped with double insulation guaranteeing electrical protection for the user of the apparatus.

11. Device according to any of claims 6 to 10, characterised in that the treatment unit is a water softener for a dishwasher.

12. Device according to any of claims 6 to 10, characterised in that the treatment unit is a water softener for domestic water.

## Patentansprüche

1. Verfahren zur Optimierung des Betriebszyklus einer Wasserbehandlungseinheit, **dadurch gekennzeichnet, dass** es aus
- einer Phase der Erfassung der Messwerte physikalischer oder chemischer Parameter, die den Sättigungs- oder Verarmungsgrad des Behandlungsmediums widerspiegeIn, durch mindestens eine Sonde (6, 7), die in einem Behandlungsbehälter (1) angeordnet ist,
- einer Phase der Analyse dieser Messwerte mittels eines Algorithmus, wobei
- der Algorithmus aus einer Verarbeitung der Veränderung dieser Messwerte und aus der Ermittlung der Wendepunkte, die aus dieser Veränderung resultieren, besteht, die einem Verarmungs- oder Sättigungsgrad des Behandlungsmediums entspricht, von welchem ausgehend es günstig ist, die Regeneration des Mediums durchzuführen, damit die Behandlungseinheit ihre Wirksamkeit zurückerhält, wobei dieser Algorithmus einerseits von dem physikochemischen Charakter des zu behandelnden Fluids sowie den Veränderungen dieses physikochemischen Charakters an ein und demselben Verwendungspunkt im Laufe der Zeit und andererseits von den verschiedenen statistischen Schwankungen der Messkette vollkommen unabhängig ist, und
- einer Phase des Auslösens einer Betriebsstufe der Wasserbehandlungseinheit
besteht.

2. Optimierungsverfahren nach Anspruch 1, **dadurch gekennzeichnet, dass** die Auslösephase in der Stufe der Regeneration oder des Ersatzes von Behandlungsmedium und/oder Wasserbehandlungseinheit besteht.

3. Optimierungsverfahren nach Anspruch 1 oder 2, **dadurch gekennzeichnet, dass** es eine Störung der Regenerationsstufe findet und anzeigt.

4. Optimierungsverfahren nach einem der vorhergehenden Ansprüche, **dadurch gekennzeichnet, dass** die Auslösephase in der Entnahmestufe der Wasserbehandlungseinheit besteht.

5. Verfahren nach einem der vorhergehenden Ansprüche, **dadurch gekennzeichnet, dass** es der verwendete Algorithmus erlaubt, einen niedrigeren Verbrauch an Regenerationslösung und Regenerationswasser zu erreichen.

6. Vorrichtung zur Durchführung des Verfahrens nach den Ansprüchen 1 bis 5, **dadurch gekennzeichnet, dass** sie einen mit einem Behandlungsmaterial gefüllten Behälter umfasst, der außerdem mit mindestens einer Sonde (6, 7) versehen ist, welche die Messung einer physikalischen bzw. chemischen Größe oder eines physikalischen bzw. chemischen Parameters ermöglicht, die/der den sättigungs- oder Regenerationszustand des Behandlungsmediums widerspiegelt, das die Sonden umgibt und dessen Zustand es erlaubt, einen geringen Anteil an Hohlräumen zu erhalten, um die Messelektroden der verschiedenen Sonden zu befestigen.

7. Vorrichtung nach Anspruch 6, **dadurch gekennzeichnet, dass** die Sonden die Leitfähigkeit des Mediums messen.

8. Vorrichtung nach Anspruch 6 oder 7, **dadurch gekennzeichnet, dass** vorzugsweise mindestens zwei Sonden vorhanden sind und diese in einer diametral entgegengesetzten oder diametral übereinanderliegenden oder in einer Position angeordnet sind, die dazwischen liegt.

9. Vorrichtung nach einem der Ansprüche 6 bis 8, **dadurch gekennzeichnet, dass** der das Behandlungsmaterial enthaltende Behälter mit spezifischen Einrichtungen für die Abgabe und Verteilung des zu, behandelnden Fluids und der Regenerationslösung versehen ist.

10. Vorrichtung nach einem der Ansprüche 6 bis 9, **dadurch gekennzeichnet, dass** sie eine elektronische oder elektromechanische Einrichtung enthält, die mit einer Schutzisolierung versehen ist, die den elektrischen Schutz des Benutzers der Vorrichtung gewährleistet.

11. Vorrichtung nach einem der Ansprüche 6 bis 10, **dadurch gekennzeichnet, dass** die Behandlungseinheit ein Wasserenthärter für Geschirrspülmaschinen iat.

12. Vorrichtung nach einem der Ansprüche 6 bis 10, **dadurch gekennzeichnet, dass** die Behandlungseinheit ein Wasserenthärter für im Haushalt verwendetes Wasser ist.
